Europäisches Patentamt

European Patent Office

Office européen des brevets

(11) Veröffentlichungsnummer: **0 180 903**
**A2**

## (12) EUROPÄISCHE PATENTANMELDUNG

(21) Anmeldenummer: 85113766.1

(22) Anmeldetag: 29.10.85

(51) Int. Cl.⁴: **F 16 J 15/52**

(30) Priorität: 07.11.84 DE 3440605
22.10.85 DE 3537448

(43) Veröffentlichungstag der Anmeldung:
14.05.86 Patentblatt 86/20

(84) Benannte Vertragsstaaten:
AT BE CH DE FR GB IT LI LU NL SE

(71) Anmelder: Klein, Schanzlin & Becker Aktiengesellschaft
Johann-Klein-Strasse 9
D-6710 Frankenthal(DE)

(72) Erfinder: Klein, Johannes
Mühlbergweg 8
D-6702 Bad Dürkheim 3(DE)

(54) **Hermetisch dichte Wellendurchführung für Schwenk- und Drehbewegungen.**

(57) Die Erfindung betrifft eine wellendurchführung in hermetisch dichter Ausführung. Zwischen zwei fluchtenden, eine gemeinsame Drehachse aufweisenden Wellenenden erfolgt eine Bewegungsübertragung durch ein exzentrisch zur Drehachse angeordnetes Umschlußpaar. Zwischen diesem ist eine mit einem Dichtelement verbundene nicht drehende Dichtkappe angeordnet, deren Mittelpunkt eine kreisförmige Bewegung um die Drehachse ausführt. Mit dem rotationssymmetrischen von Kreisexzentern gebildeten Umschlußpaar erfolgt eine flächenförmige Kräfteübertragung.

Fig.6

Hermetisch dichte Wellendurchführung für Schwenk- und Drehbewegungen

Die Erfindung betrifft eine Wellendurchführung gemäß dem Oberbegriff des Hauptanspruches.

Bei Armaturen, Pumpen, in Meß- und Regeleinrichtungen sowie anderen Anlagekomponenten, mit denen aggressive Medien in irgendeiner Weise gehandhabt werden, wird häufig eine hermetische Abdichtung gefordert. Beispielsweise, um schädliche Umwelteinflüsse von dem jeweils ablaufenden Prozeß fernzuhalten bzw. aggressive Medien von der Umwelt fernzuhalten. Unbedingt notwendig sind hermetisch dichte Wellendurchführungen in Anlagen, in denen verfahrensbedingt ein Vakuum aufrechterhalten werden muß.

Die DE-OS 15 50 699 zeigt eine vakuumdichte Wellendurchführung. Zur Übertragung der rotorischen Bewegung ist ein Wellenende gekrümmt ausgeführt und drehbar in einem hutförmigen Mitnehmer gelagert. Letzterer ist dicht mit einem Faltenbalg verbunden und der Zapfen des hutförmigen Mitnehmers wirkt mit einer Kurbelscheibe zusammen. Bei der Drehbewegung der Kurbelscheibe führt das gekrümmte Wellenende eine ausladende Bewegung um die eigentliche Drehachse aus. Diese nicht spielfreie Ausführungsform einer Wellendurchführung erfordert einen großen Platzbedarf und ist für genaue Bewegungsübertragungen nicht geeignet.

Aus der DE-AS 11 31 054 ist eine Konstruktion bekannt, die eigentlich nur Winkelbewegungen übertragen kann. Die miteinander zu koppelnden Wellenenden weisen einander diametral gegenüberliegende Kurbelzapfen 5, 6 auf. Zwischen diesen ist eine trennende Kurbelwange 3 angeordnet, die beidseitig mit Sackbohrungen zur

.../2

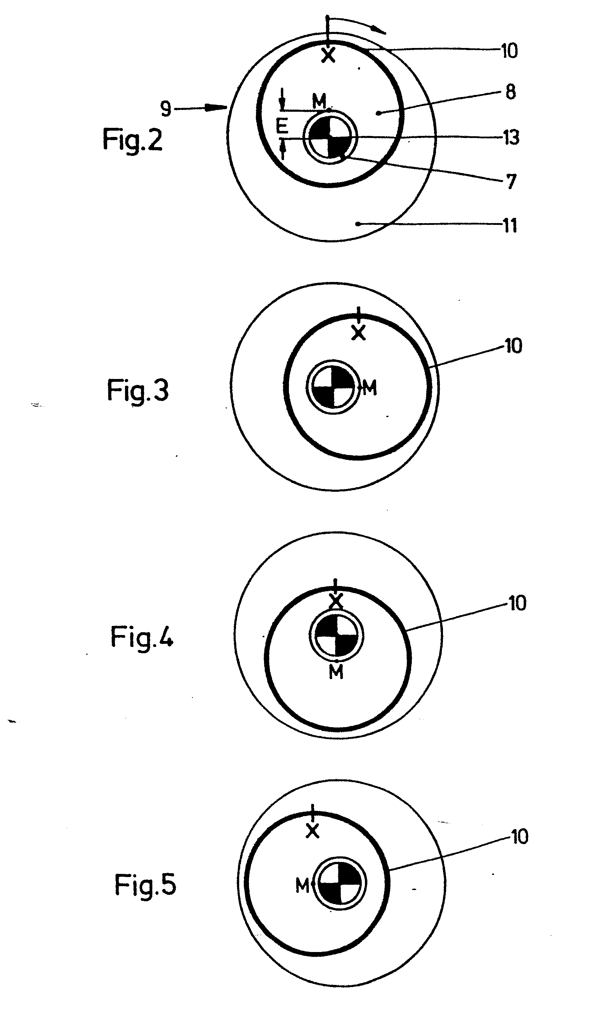

Aufnahme der Kurbelzapfen versehen ist. Der abdichtende Faltenbalg ist mit dem einen Ende am Gehäuse und mit dem anderen Ende an der Kurbelwange befestigt. Während der Winkelbewegung bewegt sich die Kurbelwange exzentrisch um die Wellenachse. Wie die zugehörigen Fig. 2 und 3 zeigen, lassen die in den Nuten 68, 69 geführten Bolzen 70, 71 für die Kurbelwange nur eine Winkelbewegung zu. Die Schrift erwähnt zwar, daß diese Nuten auch als Kreisringe ausgebildet werden können und damit eine kontinuierliche Drehbewegung ermöglichen sollen. Jedoch besteht dann die Gefahr, daß in bestimmten Stellungen, rechte und linke Totpunktlage auf Verbindungslinie 78, und bedingt durch die Fertigungstoleranzen, ein Verkanten und damit Blockieren der Wellendurchführung die Folge wäre. Aus diesem Grunde ist für die Übertragung kontinuierlicher Drehbewegungen die Verwendung eines Planetengetriebes gemäß Fig. 4 vorgesehen. Die dadurch bedingte Zwangsführung ermöglicht erst eine störungsfreie Übertragung von Drehbewegungen.

Lediglich eine andere Art der Zwangssteuerung mit in linearen Nuten angeordneten Gleitstücken zeigt die DE-PS 12 33 668. Ansonsten entspricht sie der vorgenannten Konstruktion.

Der Erfindung liegt die Aufgabe zugrunde, eine vielseitig anwendbare hermetisch dichte Wellendurchführung zu entwickeln, die bei einfachem Aufbau in zuverlässiger Weise Schwenk- und Drehbewegungen in jeder Richtung und jeder Größe übertragen kann. Die Lösung dieser Aufgabe erfolgt gemäß dem kennzeichnenden Teil des Hauptanspruches.

Diese Lösung ermöglicht die Herstellung einer kompakten hermetischen Wellendurchführung. Die Teile des Umschlußpaares und die mit dem Dichtelement verbundene Dichtkappe übertragen die jeweiligen Kräfte flächenförmig. Durch das exzentrisch zu den Wellenenden angeordnete ebene Umschlußpaar, welches aus formschlüssig zusammenwirkenden, rotationssymmetrisch ausgebildeten Teilen, wie Kreisexzentern, besteht, führt der Mittelpunkt der dazwischen angeordneten Dichtkappe eine Kreisbewegung um die zentrische Drehachse der beiden Wellenenden aus und überträgt dabei das jeweils vorhandene Drehmoment. Dabei ist der mit der einen Welle verbundene innere Teil des Umschlußpaares innerhalb des mit der anderen Welle verbundenen äußeren Teiles des Umschlußpaares gelagert. Zur Aufnahme des als Kreisexzenter ausgebildeten inneren Teiles besitzt das äußere Teil des Umschlußpaares eine entsprechend exzentrisch angebrachte Bohrung. Zwischen diesen beiden Teilen ist als dichtendes Element die mit dem Faltenbalg verbundene Dichtkappe angeordnet. Die bei der Drehmomentübertragung auf die Dichtkappe einwirkenden Gleit-Reibungskräfte bewirken gleichzeitig eine minimale tordierende Belastung des Faltenbalges. Aufgrund von Versuchen wurde festgestellt, daß diese minimalen Kräfte ohne weiteres vom Faltenbalg aufgenommen werden.

Ein wesentlicher Vorteil der erfindungsgemäßen Gestaltung besteht auch darin, daß es unerheblich ist, von welchem Wellenende die Kraft eingeleitet wird. Es ist also ohne weiteres eine Vertauschung des Kraftflusses zwischen treibendem und getriebenem Wellenende möglich.

Eine Ausgestaltung der Erfindung sieht vor, daß die Wellendurchführung als eigenständiges Bauteil ausgebildet ist. Somit können bereits montierte Maschinen, Armaturen, Aggregate oder dergleichen auch nachträglich damit ausgestattet werden.

Nach einer weiteren Ausgestaltung der Erfindung sichern das treibende bzw. das getriebene Teil die Wellen gegen axiale Verschiebung. Dies kann in einfacher Weise dadurch erfolgen, daß

.../4

-4-

das jeweilige Teil des Umschlußpaares an einer Lagerbuchse der jeweiligen Welle anliegt.

Zur Übertragung großer Kräfte sieht eine andere Ausgestaltung der Erfindung vor, daß das Umschlußpaar mit seiner äußeren Kontur innerhalb eines umgebenden Radial- und/oder Axiallagers angeordnet ist.

Durch die Anbringung eines Radial- und/oder Axiallagers an der äußeren Kontur des Umschlußpaares kann dieses in einfachster Weise von Zusatzkräften entlastet werden. Der äußere Teil des Umschluß paares läßt sich somit als Festpunkt ausbilden, wodurch eventuell auftretende Axialschübe einfach aufzunehmen sind. In denjenigen Anwendungsfällen, in denen keine Axialkräfte auftreten, reicht zur Lagerung des Umschlußpaares ein Radiallager aus. Entsprechend den Einsatzbedingungen und Betriebsverhältnissen können die bekannten Wälz- oder Gleitlagerbauarten Verwendung finden. Um die äußeren Abmessungen klein zu halten, bietet sich die Verwendung von Nadellagern an.

Eine Ausgestaltung sieht vor, daß das Radial- und/oder Axiallager in der Ebene der Kraftübertragung angeordnet ist. Der Vorteil dieser Lösung ist die Vermeidung zusätzlicher Biegemomente. Somit können die auftretenden Kräfte auf kürzestem Wege direkt in das Gehäuse geleitet werden. Für die Laufruhe und die Entlastung des Faltenbalges ist dies ein gravierender Vorteil.

Eine weitere Ausgestaltung sieht vor, daß am Umfang des äußeren Teiles des Umschlußpaares ein Bund zur Aufnahme von Radial- und, oder Axiallagern angebracht ist. Somit kann in einfacher Weise das äußere Teil des Umschlußpaares als Festpunkt ausgebildet werden, welcher Axialkräfte aufnimmt und ins Gehäuse ableitet. Die Wellendurchführung wird dann in vorteilhafter Weise so angeordnet, daß das äußere Teil des Umschlußpaares mit dem Axialkräfte oder Axialschübe aufweisenden Maschinenteil verbunden ist.

Auch ist vorgesehen, daß ein oder mehrere der einander zugekehrten axialen Stirnflächen des Umschlußpaares und/oder der Dichtkappe mit Axiallagern versehen oder als Axiallagerflächen ausgebildet sind. Mittels dieser Maßnahme kann die Reibung zwischen den Teilen minimiert werden. Die Lagerung der Dichtkappe kann mit Gleit- oder Wälzlagern oder durch eine Kombination derselben erfolgen. Dies ist von dem jeweiligen Verwendungszweck abhängig.

Für die Praxis bietet sich der Vorteil, daß ein und dieselbe Konstruktion für den Normalbetrieb und durch Hinzufügung zusätzlicher Lager auch für hohe Belastungen eingesetzt werden kann. Aufwendige Getriebekonstruktionen sind damit entbehrlich geworden.

Ein Ausführungsbeispiel der Erfindung ist in den Zeichnungen dargestellt und wird im folgenden näher beschrieben. Es zeigen die

Fig. 1 einen Querschnitt durch eine eigenständig ausgebildete Wellendurchführung, die

Fig. 2 bis 5 in der Draufsicht gemäß Schnitt II-II verschiedene Stellungen eines durch Kreisexzenter gebildeten Umschlußpaares, die

Fig. 6 eine mit zusätzlichen Radiallagern versehene Wellendurchführung, die

Fig. 7 eine axial und radial gelagerte Wellendurchführung und die

Fig. 8 eine vergrößerte Darstellung einer Lageranordnung innerhalb des Umschlußpaares.

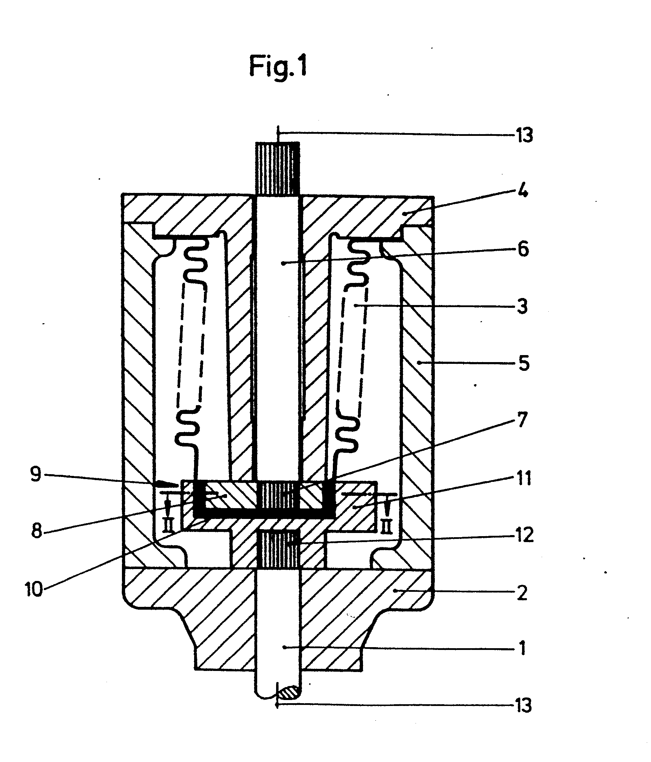

Das Ausführungsbeispiel der Fig. 1 zeigt eine als eigenständige Baueinheit ausgebildete hermetische Wellendurchführung, bei der die in Drehung zu versetzende Welle 1 gegenüber dem hier gezeigten Flansch 2 – oder auch einem Gehäuse – hermetisch abzudichten ist. In dem gezeigten Ausführungsbeispiel erfolgt dies durch ein als Faltenbalg ausgebildetes elastisches Dichtelement 3, welches mit einem Einspannteil vom Lagerdeckel 4 hermetisch dicht im Gehäuse 5 gehalten wird. Das hier die Wellendurchführung enthaltende Gehäuse 5 ist desweiteren hermetisch dicht mit dem Flansch 2 verbunden. Die Verwendung von Schweißdichtungen ist möglich.

Der Lagerdeckel 4 übernimmt die Lagerung der antreibenden Welle 6, deren Wellenende 7 drehfest mit dem hier treibenden Teil 8 des Umschlußpaares 9 verbunden ist. Eine Dichtkappe 10 umgibt das treibende Teil 8 und ist dicht mit dem Dichtelement 3 verbunden. Das treibende Teil 8 ist zusammen mit der Dichtkappe 10 in dem hier getriebenen Teil 11 gleitend gelagert, wobei das Teil 11 mit dem Wellenende 12 der anzutreibenden Welle 1 drehfest verbunden ist und sich an dem abzudichtenden Flansch 2 abstützt.

Das innere Teil 8 des Umschlußpaares 9 ist rotationssymmetrisch ausgebildet und besitzt die Form einer Scheibe, wobei eine exzentrisch angebrachte Bohrung die Verbindung mit dem Ende 7 der Welle 6 ermöglicht. Das rotationssymmetrisch ausgebildete Teil 11 des Umschlußpaares 9 wiederum weist eine exzentrisch angebrachte Bohrung auf, in der die Dichtkappe 10 und darin das innere Teil 8 gelagert ist. Aufgrund dieser exzentrischen Anordnung ist die Übertragung von Drehmomenten zwischen den so verbundenen Wellenenden möglich. Die Dichtkappe 10 führt selbst keine Drehbewegung aus, sondern gleitet nur zwischen den beiden Teilen 8, 11 des Umschlußpaares 9.

Die Dichtkappe 10 überträgt die Relativbewegungen zwischen den drehenden Wellenenden 7, 12 sowie dem feststehenden Dichtelement 3. Bei der zu übertragenden Dreh- bzw. Schwenkbewegung verändert sich an dem hier verwendeten Dichtelement 3 nur die Biegelinie in Drehrichtung. Der auf die Welle 6 einwirkende Antrieb – hier nicht dargestellt – kann entweder von Hand über ein entsprechendes Bedienelement oder durch einen angekoppelten Motor erfolgen. Es ist auch ohne weiteres möglich, die Drehrichtung bzw. die Kraftflußrichtung zu ändern. Die hier gezeigte Art der Verbindung zwischen den Wellenenden 7, 12 und den Teilen 8, 11 des Umschlußpaares 9 mittels Kerbverzahnung ist nur beispielhaft und kann durch jede andere bekannte Verbindungsart ersetzt werden. Beispielsweise können die Wellen 1, 6 und die jeweils zugehörigen Teile 11, 8 auch einstückig ausgebildet sein. Auch für das Dichtelement 3 können die verschiedenen bekannten Ausführungsformen Anwendung finden.

Auf das Dichtelement 3, einem hier gezeigten Faltenbalg, wirken geringe tordierende Belastungen ein. Diese sind durch die Reibungskräfte gegeben, die aufgrund der Gleitreibung zwischen dem inneren Teil 8 und der Dichtkappe 10 sowie zwischen dem äußeren Teil 11 und der Dichtkappe 10 auftreten.

Die Fig. 2 bis 5, die eine Draufsicht gemäß der in Fig. 1 enthaltenen Schnittlinie II-II zeigen, geben die Stellung der Dichtkappe 10 während einer vollen Umdrehung wieder. Dabei zeigt die Fig. 2 die Stellungen 0 und $360^{\circ}$, die Fig. 3 die Stellung nach einer $90^{\circ}$ Bewegung und entsprechend die Fig. 4 und 5 die Stellungen nach einer $180^{\circ}$ bzw. $270^{\circ}$ Bewegung.

Zum besseren Verständnis ist an der Dichtkappe 10 ein Punkt x markiert, welcher sich bei einer Umdrehung des Umschlußpaares 9 auf einer Kreisbahn mit dem Durchmesser der zweifachen Exzentrizität E des Umschlußpaares 9 bewegt. Der hier gewählte Punkt x befindet sich immer in der gleichen Lage zum Mittelpunkt M der exzentrisch im Umschlußpaar 9 angeordneten Dichtkappe 10.

Um das Maß der Exzentrizität E ist im inneren Teil 8 des Umschlußpaares 9 die Bohrung für das Wellenende 7 der Welle 1 versetzt zur Mitte M angeordnet. Ebenso ist um dieses Maß E im Teil 11 die Bohrung für die Aufnahme der Dichtkappe 10 versetzt zur Drehachse 13 angebracht. Die jeweilige Exzentrizität wird entsprechend den räumlichen Verhältnissen und nach der Art und Ausbildung des Faltenbalges gewählt. Die im Wellenquerschnitt eingezeichnete Markierung dient der Darstellung der Drehbewegung.

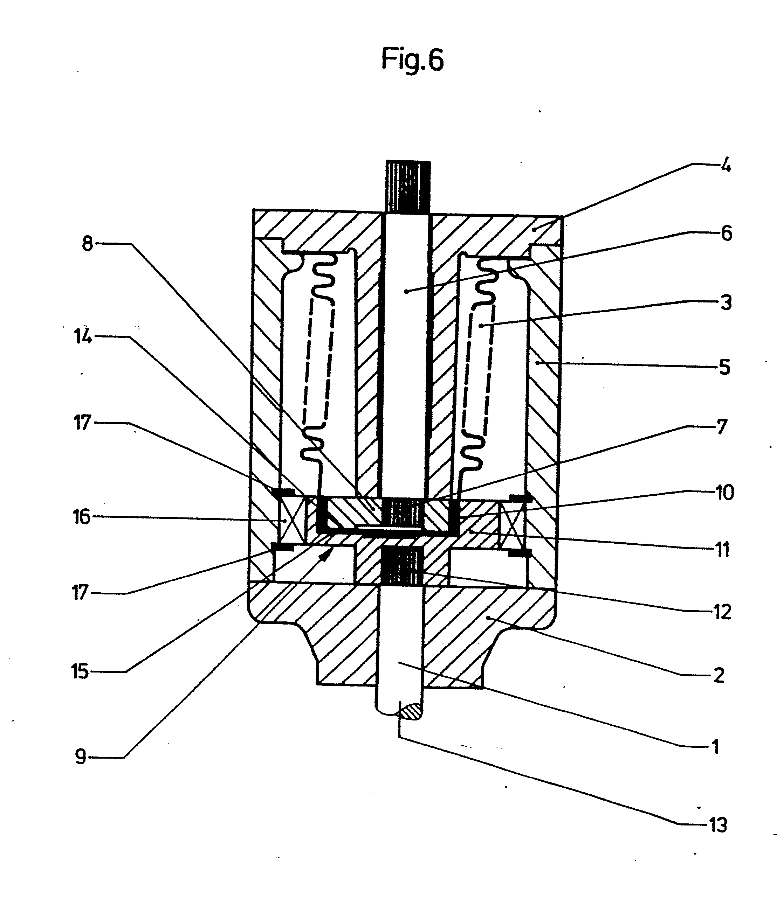

Die Fig. 6 entspricht weitgehend der Fig. 1. Die der Dichtkappe 10 zugekehrte Stirnseite des inneren Teiles 8 ist mit einer Axiallagerfläche 14 versehen. Eine entsprechende Axiallagerfläche 15 weist das hier getriebene oder äußere Teil 11 auf. Damit wird die Reibung zwischen den Teilen des Umschlußpaares 9 und der Dichtkappe 10 minimiert.

Das äußere Teil 11 ist im Bereich seines äußeren Umfanges innerhalb eines schematisch dargestellten Lagers 16 angeordnet. Hierbei kann es sich um ein Gleit- oder Wälzlager handeln, welches als Radiallager ausgebildet ist. Sicherungen 17 dienen zur radialen Lagesicherung des Lagers 16, wobei auch entsprechende Gehäuseabsätze diese Funktion übernehmen können.

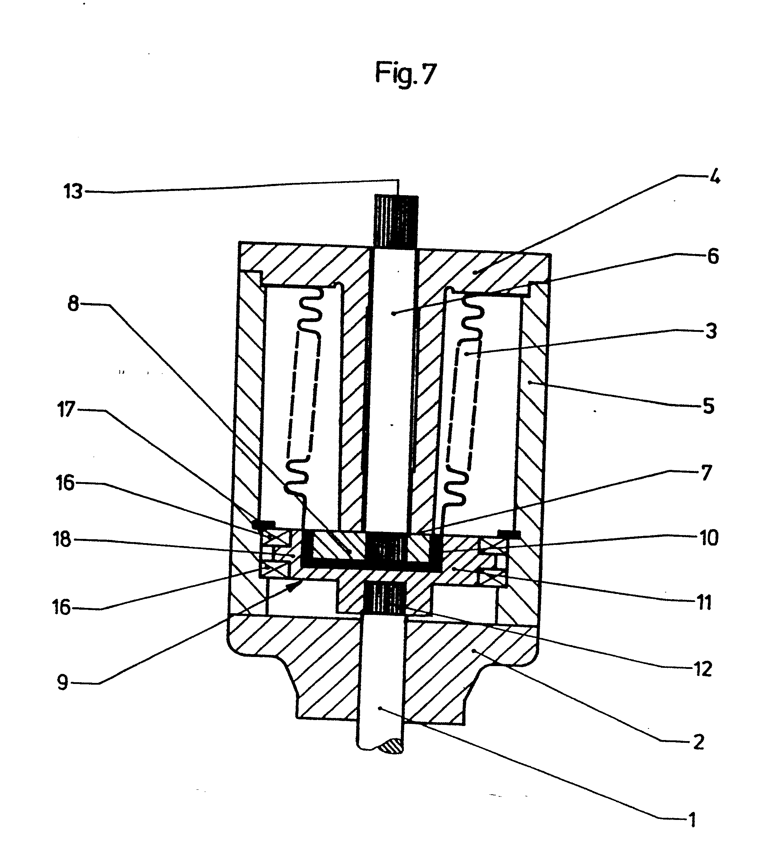

Die Fig. 7 zeigt an einem Ausführungsbeispiel, daß das äußere Teil 11 des Umschlußpaares 9 mit einem Bund 18 versehen ist, der die Anbringung zweier Lager 16 ermöglicht. Diese Lager 16 können sowohl Radial- als auch Axialkräfte aufnehmen und
ermöglichen damit die Ausbildung des äußeren Teiles 11 des
Umschlußpaares 9 als Festpunkt innerhalb dieses Systems.
Eventuell auftretende Axialschübe lassen sich somit direkt in
das Gehäuse 5 ableiten. Bei diesem Beispiel erfolgt der Einbau
der Lager 16 von der Seite des Lagerdeckels 4 her, während
das Beispiel der Fig. 6 den Einbau von der Seite des Flansches 2
her zeigt.

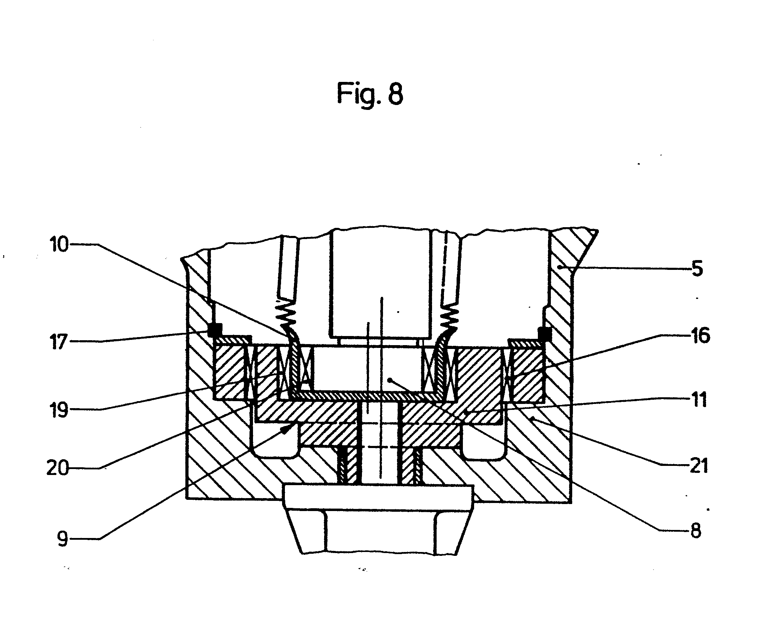

Die Fig. 8 zeigt in etwas vergrößerter Darstellung die Lagerung
des Umschlußpaares 9 und der Dichtkappe 10. Das äußere Teil 11
des Umschlußpaares ist in einem im Gehäuse 5 festgelegten, als
Nadellager ausgebildeten Lager 16 gelagert. Zwischen dem inneren
Teil 8 und der Dichtkappe 10 sowie zwischen der Dichtkappe 10
und der exzentrisch angeordneten Aufnahmebohrung im äußeren
Teil 11 sind ebenfalls Nadellager 19, 20 angeordnet. Zur Lagesicherung des äußeren Lagers 16 dient eine Sicherung 17 sowie ein
Absatz 21 des Gehäuses 5. Diese Wellendurchführung findet bei
einer Maschine Verwendung, bei der keine Axialschübe auf
das Umschlußpaar einwirken. Es ist auch ohne weiteres möglich,
diese Art der Wellendurchführung in eine Maschine direkt
einzubauen.

Klein, Schanzlin & Becker Aktiengesellschaft

Patentansprüche

1. Wellendurchführung in hermetisch dichter Ausführung zur Übertragung von Dreh- und/oder Schwenkbewegungen, bestehend aus miteinander verbundenen Wellenenden und deren Trennung durch ein elastisches Dichtelement, dessen einer Einspannteil dicht im Gehäuse befestigt ist und dessen anderer Einspannteil mit einem die Dreh- oder Schwenkbewegung übertragenden Mitnehmer dicht verbunden ist, wobei die zu verbindenden Wellenenden in einer Flucht angeordnet sind und eine gemeinsame Drehachse aufweisen, dadurch gekennzeichnet, daß die Bewegungsübertragung durch ein ebenes, zwischen den fluchtenden Wellenenden exzentrisch angeordnetes, rotationssymmetrisches Umschlußpaar (9) erfolgt, daß eine Dichtkappe (10) formschlüssig zwischen den drehfest mit den Wellenenden (7, 12) verbundenen, treibenden und getriebenen Teilen (8, 11) des Umschlußpaares (9) angeordnet ist und daß die Dichtkappe (10) mit dem Dichtelement (3) dicht verbunden ist.

2. Wellendurchführung nach Anspruch 1, dadurch gekennzeichnet, daß die Wellendurchführung als eigenständiges Bauteil ausgebildet ist.

3. Wellendurchführung nach den Ansprüchen 1 oder 2, dadurch gekennzeichnet, daß das treibende und/oder das getriebene Teil (8, 11) des Umschlußpaares (9) die Wellen (1, 6) gegen axiale Verschiebung sichert.

0180903

4. Wellendurchführung nach den Ansprüchen 1 bis 3, dadurch gekennzeichnet, daß das Umschlußpaar (9) mit seiner äußeren Kontur innerhalb eines umgebenden Radial- und/oder Axiallagers (16) angeordnet ist.

5. Wellendurchführung nach den Ansprüchen 1 bis 4, dadurch gekennzeichnet, daß das Radial- und/oder Axiallager (16) in der Ebene der Kraftübertragung angeordnet ist.

6. Wellendurchführung nach den Ansprüchen 1 bis 5, dadurch gekennzeichnet, daß am Umfang des äußeren Teiles (11) des Umschlußpaares (9) ein Bund (18) zur Aufnahme von Radial- und/oder Axiallagern (16) angebracht ist.

7. Wellendurchführung nach den Ansprüchen 1 bis 6, dadurch gekennzeichnet, daß ein oder mehrere der einander zugekehrten axialen Stirnflächen des Umschlußpaares (9) und/oder der Dichtkappe (10) mit Axiallagern versehen oder als Axiallagerflächen (14, 15) ausgebildet sind.

Fig.1

Fig.2

9 →

X

M

E

10

8

13

7

11

Fig.3

X

M

10

Fig.4

X

M

10

Fig.5

X

M

10

Fig.6

## Fig.7

Fig. 8